# EUROPÄISCHE PATENTSCHRIFT

(11) **EP 1 147 311 B1**
(45) Veröffentlichungstag und Bekanntmachung des Hinweises auf die Patenterteilung: **09.07.2003**
(21) Anmeldenummer: 00903512.2
(22) Anmeldetag: 12.01.2000
(51) Int. Cl.: F04B 39/04, F16J 9/08, F16J 15/44

(54) **KLIMAANLAGE FÜR EIN KRAFTFAHRZEUG**
AIR CONDITIONING SYSTEM FOR AN AUTOMOBILE
SYSTEME DE CLIMATISATION POUR AUTOMOBILE

(30) Priorität: 29.01.1999 DE 19903425
(43) Veröffentlichungstag der Anmeldung: 24.10.2001
(73) Patentinhaber: Zexel Valeo Climate Control Corporation, Saitama 360-0193 (JP)
(72) Erfinder: HESSE, Ullrich, D-71563 Affalterbach (DE)
(74) Vertreter: Popp, Eugen, Dr.
(86) Internationale Anmeldenummer: DE0000082
(87) Internationale Veröffentlichungsnummer: WO00045052

(56) Entgegenhaltungen:
- WO-A-97/00393
- DE-B- 2 921 454
- US-A- 3 711 104
- US-A- 4 048 975
- US-A- 4 594 055

## Beschreibung

Die Erfindung betrifft eine Klimaanlage für ein Kraftfahrzeug mit einem Verdichter nach dem Oberbegriff von Patentanspruch 1.

Derartige Klimaanlagen werden bisher mit Kältemittel wie R12 oder R134a betrieben. Zum Betrieb einer solchen Anlage muß der Verdichter eine Druckdifferenz zwischen Saugdruck und Gegendruck von ca. 10 bis 20 bar aufbringen. Dies ist mit Verdichterkolben möglich, die keinen oder höchstens einen Kolbenring aufweisen.

Halogenorganische Kältemittel sind in letzter Zeit in die öffentliche Kritik geraten, da sie bei ihrer Freisetzung in die Atmosphäre ozonabbauend wirken können und den Treibhauseffekt fördern. Es sind daher erhebliche Bemühungen unternommen worden, Klimaanlagen zu entwickeln, die mit nichtozongefährdenden beziehungsweise Treibhauseffekt-neutralen Kältemitteln arbeiten. Dabei stößt man auf das Problem, daß potentiell als Kältemittel geeignete Substanzen, die diese Anforderungen erfüllen, erheblich höhere Druckdifferenzen erfordern. Diese sind mit den herkömmlichen Konstruktionen von Klimaanlagenverdichtern nicht ohne weiteres erzielbar. Versucht man, solche Kältemittel in einem Verdichter mit einem herkömmlich konstruierten Kolben ohne Kolbenring oder mit einem einzelnen Kolbenring einzusetzen, so beeinträchtigen Leckageverluste durch am Kolbenmantel durchströmendes Kältemittel den Wirkungsgrad eines solchen Verdichters empfindlich, wenn sie nicht gar seine Funktionsfähigkeit vollends in Frage stellen. Es sind daher bei Klimaanlagen, die mit hoch zu verdichtenden Kältemitteln arbeiten, Zylinder eingesetzt worden, deren Kolben bis zu vier Kolbenringe tragen. Ein Verdichter für eine Fahrzeugklimaanlage mit einem Zylinder ist beispielsweise aus der U S4,594,055 bekannt. Um die Abdichtung zwischen Kolben und Zylinder zu verbessern, weist der Kolben an seiner Mantelfläche zwei in Umgangsrichtung verlaufende Rillen und jeweils darin plazierte Kolbenringe auf. Gegenüber einem Kolben mit nur einem Kolbenring ist dieser Kolben im Zylinder schwerer verkippbar, wodurch der Verschleiß der Zylinderinnenwand verringert wird. Zudem wird die Abdichtung zwischen Kolben und Zylinder verbessert. Allerdings wird dadurch der Bauaufwand des Verdichters erhöht. Außerdem nimmt die Reibung des Kolbens an den Zylinderinnenwänden erheblich zu, so daß zum Betreiben des Verdichters zusätzliche Antriebsarbeit erforderlich ist, die zur Kälteerzeugung nicht beiträgt. Vielmehr wird die zwischen Kolben und Zylinder erzeugte Reibungswärme weitgehend vom Kältemittel aufgenommen, was absolut unerwünscht ist.

Diese Nachteile treten bei der Klimaanlage mit den Merkmalen von Patentanspruch 1 nicht auf. Weitere vorteilhafte Ausgstaltungen der erfindungsgemäßen Klimaanlage ergeben sich aus den abhängigen Patentansprüchen.

### Vorteile der Erfindung

Durch die Erfindung wird eine Klimaanlage für ein Kraftfahrzeug geschaffen, die den Betrieb mit hoch zu verdichtenden Kältemitteln durch eine Begrenzung der Leckageverluste im Verdichter ermöglicht, ohne daß die zum Betreiben der Klimaanlage aufzubringende Reibleistung im Vergleich zu Klimaanlagen für geringere Druckdifferenzen merklich erhöht ist.

Eine solche Klimaanlage eignet sich besonders zum Betrieb mit CO₂ als Kältemittel im sogenannten transkritischen Prozeß oder mit anderen Kältemitteln, die mit hohen Differenzen zwischen Saug- und Gegendruck von über 20 bar und bis zu 100 bar betrieben werden müssen.

Bei einer verbesserten Klimaanlage ist vorgesehen, daß der Kolben mit einer Labyrinthdichtung an seiner Mantelfläche versehen ist. Eine solche Labyrinthdichtung, die vorzugsweise eine Vielzahl von in Umfangsrichtung umlaufenden Rillen an der Mantelfläche umfaßt, eignet sich gerade bei hohen Drücken auch zur Reduzierung von Leckageverlusten. Der Grund dafür ist, daß gerade dann, wenn der Druck des im Zylinder enthaltenen Kältemittels hoch ist, also besonders starke Leckageverluste zu erwarten sind, die Viskosität des Kältemittels infolge der starken Verdichtung nicht mehr vernachlässigbar ist, und infolgedessen die Verwirbelung von zwischen Zylinderinnenwand und Kolbenmantel entweichendem Kältemittel in den Rillen der Labyrinthdichtung einen wirksamen Strömungswiderstand bildet.

Bei einer Ausgestaltung der erfindungsgemäßen Klimaanlage, bei der der Kolben in herkömmlicher Weise wenigstens eine Rille mit einem darin montierten Kolbenring aufweist, ist vorgesehen, daß in der Rille zusätzlich ein Ring aus einem flexiblen dichtfähigen Material angeordnet ist. Aufgabe dieses Rings ist, den Weg des Kältemittel-Leckstroms, der bei einem Kolben mit Kolbenring wesentlich durch die Rille entlang der Stirnflächen und der inneren Umfangsfläche des Kolbenrings führt, zu verengen beziehungsweise zu versperren.

Zu diesem Zweck ist der Ring im wesentlichen zwischen einer niederdruckseitigen Seitenwand der Rille und dem Kolbenring angeordnet, so daß der Kolbenring vom Kältemedium gegen den Ring gedrückt wird und dadurch eine Dichtwirkung an dem Ring erzielt wird. Der Ring selber springt zweckmäßigerweise nicht über die Mantelfläche des Kolbens vor, so daß er mit der Innenwand des Zylinders nicht in Kontakt kommt, also keinen Reibverschleiß erleidet und auch die zum Antrieb des Kolbens aufzubringende Reibleistung nicht erhöht.

Es ist ferner bevorzugt, daß der Kolbenring in der Rille mit axialem Spiel gehalten ist. Dies kann es dem Kältemittel ermöglichen, von der Hochdruckseite bis in einen Zwischenraum zwischen der Innenfläche des Kolbenrings und dem Boden der Rille vorzudringen und so den Kolbenring auf seinem gesamten Umfang gleichmäßig gegen die Zylinderinnenwand zu pressen. Dabei kann es ausreichend sein, wenn dieses Spiel nur in einer Hochdruckphase des Arbeitszyklus des Verdichters durch axiale Kompression des Rings aus flexiblem, dichtfähigem Material erzeugt wird.

Ein Zwischenraum kann auch zwischen dem Boden der Rille und der Innenseite des Rings aus flexiblem, dichtfähigem Material vorgesehen sein, um diesen, genauso wie den Kolbenring, durch in den Zwischenraum eindringendes Kältemittel radial nach außen zu beaufschlagen und so die entsprechende Dehnbewegung des Kolbenrings zu unterstützen.

Weitere Merkmale und Vorteile ergeben sich aus der nachfolgenden Beschreibung von Ausführungsbeispielen.

### Figuren

- Figur 1: zeigt einen Ausschnitt eines Verdichterzylinders für eine Klimaanlage ; und
- Figur 2: zeigt einen Ausschnitt eines Zylinders gemäß einer Ausgestaltung der Erfindung.

### Beschreibung der Ausführungsbeispiele

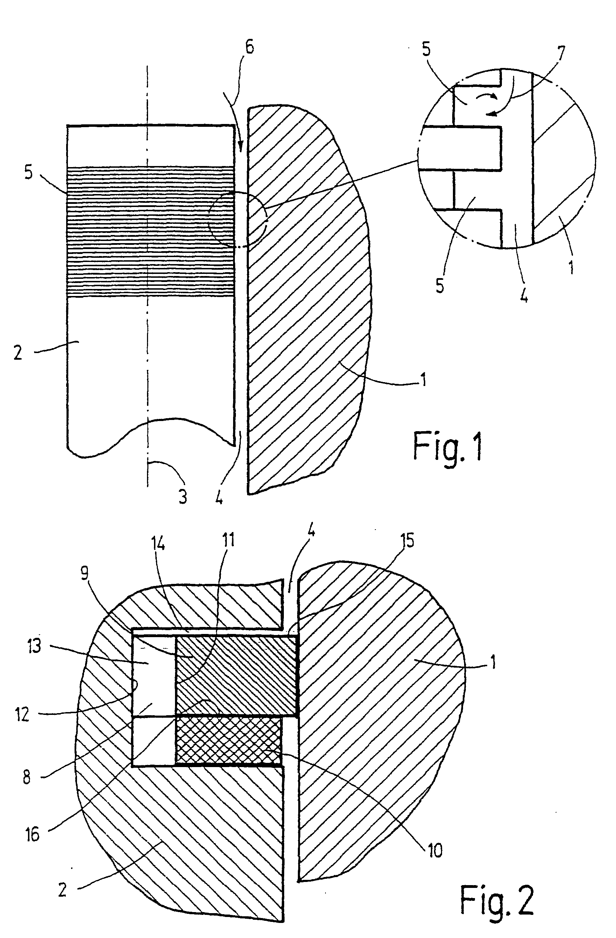

Die Darstellung in Figur 1 ist beschränkt auf einen Ausschnitt eines Zylinders für einen Verdichter einer Klimaanlage. Die weiteren Elemente einer solchen Klimaanlage sind bekannt und brauchen hier nicht detailliert behandelt zu werden.

Figur 1 zeigt einen Abschnitt einer Zylinderwand 1 sowie einen Kolben 2, der entlang seiner durch eine Strichpunktlinie 3 bezeichneten Mittelachse in dem Zylinder verschiebbar ist. Der Kolben 2 besitzt eine Mantelfläche, die an der Zylinderwand 1 eng anliegt (der Spalt 4 zwischen beiden ist in der Figur der klareren Darstellung wegen unmaßstäblich vergrößert gezeichnet). Auf der Mantelfläche des Kolbens 2 ist eine Vielzahl von in Umfangsrichtung umlaufenden Rillen 5 gebildet, von denen ein Ausschnitt in dem Kreis an der rechten Seite der Figur vergrößert dargestellt ist. In diesem Kreis ist zu erkennen, daß die Rillen 5 eine Länge in Richtung der Achse 3 sowie eine radiale Tiefe haben, die der Breite des Spalts 4 zwischen dem Kolben und der Zylinderwand 1 in etwa entspricht. Kältemittel, das in einer Hochdruckphase des Zylinders in Richtung des Pfeils 6 aus dem Zylinder entweicht, verwirbelt an jeder einzelnen Rille 5, wie durch Pfeile 7 angedeutet, so daß keine gleichmäßige, laminare Leckströmung im Spalt 4 entstehen kann. So wird eine erhebliche Reduzierung des Leckstroms erreicht, ohne daß der Spalt 4 im Vergleich zu herkömmlichen Kolben-Zylinderkonstruktionen verengt werden muß. Die Reibung zwischen Zylinderwand und Kolben ist daher nicht höher als bei herkömmlichen Konstruktionen.

Zur Unterstützung der Wirkung der Labyrinthdichtung können zusätzlich auch Kolbenringe an dem Kolben vorgesehen werden.

Figur 2 zeigt im Schnitt eine Kolbenringdichtung gemäß der Erfindung. Diese kann für sich allein oder in Kombination mit der oben beschriebenen Labyrinthdichtung eingesetzt werden.

In Figur 2 ist ein Ausschnitt aus einer Zylinderwand 1 sowie aus einem entlang dieser Zylinderwand beweglichen Kolben 2 zu sehen. Eine Rille 8 erstreckt sich in Umfangsrichtung über die Mantelfläche des Kolbens wie die Rillen in Figur 1, hat aber eine erheblich größere Länge und Tiefe als diese. In der Rille 8 sind ein Kolbenring 9 sowie ein Ring 10 aus einem elastischen, dichtfähigen Material untergebracht. Die äußere Umfangsfläche des Kolbenrings 9 liegt an der Zylinderwand 1 an; zwischen der inneren Umfangsfläche des Rings 9 und dem Boden 12 der Rille 8 befindet sich ein Zwischenraum 13. Der Zwischenraum 13 ist über einen Spalt 14, der entlang der hochdruckseitigen Stirnfläche des Kolbenrings 9 verläuft, und den Spalt 4 zwischen Zylinderwand 1 und Mantelfläche des Kolbens 2 mit der Druckkammer des Zylinders (nicht dargestellt) verbunden.

Zwischen der niederdruckseitigen Stirnfläche 16 und der gegenüberliegenden Seitenwand der Rille 8 ist der Ring 10 aus dichtfähigem Material angeordnet. Dieser Ring 10 ist zweckmäßigerweise mit der Stirnfläche 16 fest verbunden. Anders als in der Figur gezeigt, kann er sich in Gestalt einer mehrseitigen Beschichtung auch bis auf die hochdruckseitige Stirnfläche 15 des Kolbenrings erstrecken. Der Zwischenraum 13 erstreckt sich auch zwischen der inneren Umfangsfläche des Rings 10 und dem Boden 12 der Rille 8. Die äußere Umfangsfläche des Rings 10 steht geringfügig in axialer Richtung hinter die Mantelfläche des Kolbens 2 zurück.

Wenn in einer Hochdruckphase des Zylinders die Stirnfläche 15 einem hohen Druck ausgesetzt ist, kann sie unter gleichzeitiger Kompression des Rings 10 in axialer Richtung nach unten in der Figur zurückweichen, wodurch sich der Spalt 14 verbreitert und Kältemittel in den Zwischenraum 13 eindringt. Der Druck des Kältemittels auf die innere Umfangsfläche 11 des Kolbenrings 9 preßt diesen gegen die Zylinderwand 1 und gewährleistet so eine wirksame Dichtung zwischen diesen beiden Flächen. Gleichzeitig preßt er den Ring 10 radial nach außen, so daß dieser sich gegebenenfalls gemeinsam mit dem Kolbenring 9 aufweitet und so dessen Auswärtsbewegung nicht behindert. Gleichzeitig schafft der axial komprimierte Ring 10 eine effektive Dichtung zwischen der niederdruckseitigen Stirnfläche 16 des Kolbenrings und der gegenüberliegenden Seitenwand der Rille 8.

Durch die Bemaßung des Rings 10 ist sichergestellt, daß dieser auch unter axialer Kompression nicht mit der Zylinderwand 1 in Kontakt kommt und daher keinem Reibverschleiß unterliegt.

Die Reibungskraft, die zum Bewegen des erfindungsgemäß abgedichteten Kolbens aufgebracht werden muß, unterscheidet sich nicht wesentlich von der eines Kolbens mit herkömmlichen Kolbenringen. Die dem gegenüber erheblich verbesserte Dichtwirkung gestattet allerdings den Gebrauch des erfindungsgemäß abgedichteten Kolbens bei Anwendungen mit erheblich erhöhten Drücken, so wie sie insbesondere in einer Klimaanlage auftreten, die ein Hochdruck-Kältemittel wie etwa CO₂ verwendet.

## Patentansprüche

1. Klimaanlage für ein Kraftfahrzeug mit einem Verdichter, der wenigstens einen Zylinder mit einem beweglichen Kolben (2) umfaßt, wobei der Kolben in seiner Mantelfläche wenigstens eine Rille (8) mit einem darin montierten Kolbenring (9) aufweist, **dadurch gekennzeichnet, daß** in der Rille (8) ein Ring (10) aus einem flexiblen, dichtfähigen Material angeordnet ist.

2. Klimaanlage nach Anspruch 1, **dadurch gekennzeichnet, daß** der Ring (10) im wesentlichen zwischen einer niederdruckseitigen Seitenwand der Rille (8) und dem Kolbenring (9) angeordnet ist.

3. Klimaanlage nach Anspruch 1 oder 2, **dadurch gekennzeichnet, daß** der Ring (10) nicht über die Mantelfläche des Kolbens (2) vorspringt.

4. Klimaanlage nach einem der Ansprüche 1 bis 3, **dadurch gekennzeichnet, daß** der Kolbenring (9) mit axialem Spiel in der Rille (8) gehalten ist.

5. Klimaanlage nach einem der Ansprüche 1 bis 4, **dadurch gekennzeichnet, daß** ein Zwischenraum (13) zwischen dem Boden (12) der Rille (8) und einer Innenseite des Rings (10) vorgesehen ist.

6. Klimaanlage nach einem der vorhergehenden Ansprüche, **dadurch gekennzeichnet, daß** Kohlendioxid als Kältemittel vorgesehen ist.

7. Klimaanlage nach einem der Ansprüche 1 bis 6, **dadurch gekennzeichnet, daß** der elastische Ring (10) als festverbundene ein- oder mehrseitige Beschichtung auf dem Kolbenring (9) aufgebracht ist.

8. Klimaanlage nach einem der vorhergehenden Ansprüche, **dadurch gekennzeichnet, daß** sie Druckdifferenzen zwischen Saug- und Gegendruck von über 50 bar erzeugt.

## Claims

1. An air-conditioning unit for a motor vehicle, having a compressor comprising at least one cylinder with a movable piston (2), wherein the outer casing of the piston has at least one groove (8) with a piston ring (9) mounted therein, **characterised in that** a ring (10) of a flexible material capable of forming a seal is arranged in the groove (8).

2. An air-conditioning unit according to claim 1, **characterised in that** the ring (10) is substantially arranged between a side wall of the groove (8) on the low pressure side and the piston ring (9).

3. An air-conditioning unit according to claim 1 or 2, **characterised in that** the ring (10) does not project beyond the outer casing of the piston (2).

4. An air-conditioning unit according to any one of claims 1 to 3, **characterised in that** the piston ring (9) is held with axial clearance in the groove (8).

5. An air-conditioning unit according to any one of claims 1 to 4, **characterised in that** a space (13) is provided between the base (12) of the groove (8) and an inner surface of the ring (10).

6. An air-conditioning unit according to any one of the preceding claims, **characterised in that** carbon dioxide is provided as a refrigerant.

7. An air-conditioning unit according to any one of claims 1 to 6, **characterised in that** the resilient ring (10) is applied to the piston ring (9) as a strongly bonded, single- or multi-sided coating.

8. An air-conditioning unit according to any one of the preceding claims, **characterised in that** it generates pressure differences of more than 50 bar between suction pressure and counterpressure.

## Revendications

1. Installation de climatisation pour un véhicule à moteur, avec un compresseur qui comprend au moins un cylindre avec un piston mobile (2), le piston présentant dans sa surface d'enveloppe au moins une rainure (8) avec une bague de piston (9) montée dedans, **caractérisée en ce qu'**une bague (10) en matériau d'étanchéité flexible est placée dans la rainure (8).

2. Installation de climatisation selon la revendication 1, **caractérisée en ce que** la bague (10) est placée pour l'essentiel entre une paroi latérale de la rainure (8) côté basse pression et la bague de piston (9).

3. Installation de climatisation selon la revendication 1 ou 2, **caractérisée en ce que** la bague (10) ne dépasse pas de la surface d'enveloppe du piston (2).

4. Installation de climatisation selon l'une des revendications 1 à 3, **caractérisée en ce que** la bague de piston (9) est maintenue dans la rainure (8) avec un jeu axial.

5. Installation de climatisation selon l'une des revendications 1 à 4, **caractérisée en ce qu'**un interstice (13) est prévu entre le fond (12) de la rainure (8) et une face intérieure de la bague (10).

6. Installation de climatisation selon l'une des revendications précédentes, **caractérisée en ce que** du dioxyde de carbone est prévu comme agent réfrigérant.

7. Installation de climatisation selon l'une des revendications 1 à 6, **caractérisée en ce que** la bague élastique (10) est appliquée sur la bague de piston (9) sous la forme d'un revêtement à une ou plusieurs couches relié fermement.

8. Installation de climatisation selon l'une des revendications précédentes, **caractérisée en ce qu'**elle produit une différence de pression supérieure à 50 bar entre la pression d'aspiration et la contre-pression.
